**Europäisches Patentamt**

**European Patent Office**

**Office européen des brevets**

(19)

(11) Numéro de publication : **0 374 065 B1**

(12) # FASCICULE DE BREVET EUROPEEN

(45) Date de publication du fascicule du brevet :
**29.04.92 Bulletin 92/18**

(51) Int. Cl.⁵ : **B65D 45/06,** B65D 53/02,
B29C 33/00, B29C 33/48,
B29C 37/00, B29C 45/00,
B29C 45/26

(21) Numéro de dépôt : **89440127.2**

(22) Date de dépôt : **04.12.89**

(54) **Bocal ou récipient similaire, procédé et dispositif de moulage autorisant sa fabrication.**

(30) Priorité : **12.12.88 FR 8816768**
**25.04.89 FR 8905936**

(43) Date de publication de la demande :
**20.06.90 Bulletin 90/25**

(45) Mention de la délivrance du brevet :
**29.04.92 Bulletin 92/18**

(84) Etats contractants désignés :
**AT BE CH DE ES GB GR IT LI LU NL SE**

(56) Documents cités :
**EP-A- 0 209 454**
**FR-A- 725 193**
**FR-A- 836 474**
**FR-A- 1 176 801**
**FR-A- 1 381 736**
**FR-A- 2 522 579**
**GB-A- 970 075**

(73) Titulaire : **VERRERIE CRISTALLERIE**
**D'ARQUES J.G. DURAND & Cie SARL**
**41, Avenue du Général de Gaulle**
**F-62510 Arques (FR)**

(72) Inventeur : **Durand, Philippe**
**Les Daneaux - Chemin de la Garenne**
**F-62510 Arques (Pas-de-Calais) (FR)**

(74) Mandataire : **Lepage, Jean-Pierre**
**Cabinet Lepage & Aubertin Innovations et**
**Prestations S.A. 23/25, rue Nicolas Leblanc**
**B.P. 1069**
**F-59011 Lille Cédex 1 (Nord) (FR)**

EP 0 374 065 B1

## Description

L'invention est relative à un conditionnement, tel que notamment bocal ou autre récipient similaire, ainsi qu'à des procédés de moulage de corps creux autorisant la fabrication du dit conditionnement, et des dispositifs de moulage autorisant la mise en oeuvre des dits procédés.

L'invention trouvera particulièrement son application dans le domaine de la fabrication des dispositifs à contenir pour l'emmagasinage ou le transport d'objets, de produits, de matériaux ou toutes substances quelconques. Un secteur particulièrement intéressant concerne la réalisation de tels conditionnements en verre.

Pour ce qui est de l'utilisation, son domaine s'étend à tous ceux où il est nécessaire de conserver des produits ou toutes substances quelconques sous ambiance de vide ou de vide partiel. Une des principales applications, non limitative, réside dans le domaine alimentaire pour constituer par exemple des bocaux en verre destinés aux conserves.

A ce sujet, au moment de la réalisation de telles conserves, qu'elles soient artisanales ou industrielles, les conditionnements étant remplis, on effectue une phase de stérilisation de ceux-ci pendant laquelle on provoque une évacuation quasi-totale de l'air restant dans le conditionnement, la pression intérieure dans le volume du conditionnement étant voisine à la pression de vapeur saturante à température ambiante.

Un des problèmes posés pour la fabrication de tels conditionnements consiste dans la réalisation d'une étanchéité importante entre le couvercle et le contenant, étanchéité nécessaire d'une part lors de la création du vide et d'autre part pour la conservation ultérieure de la conserve.

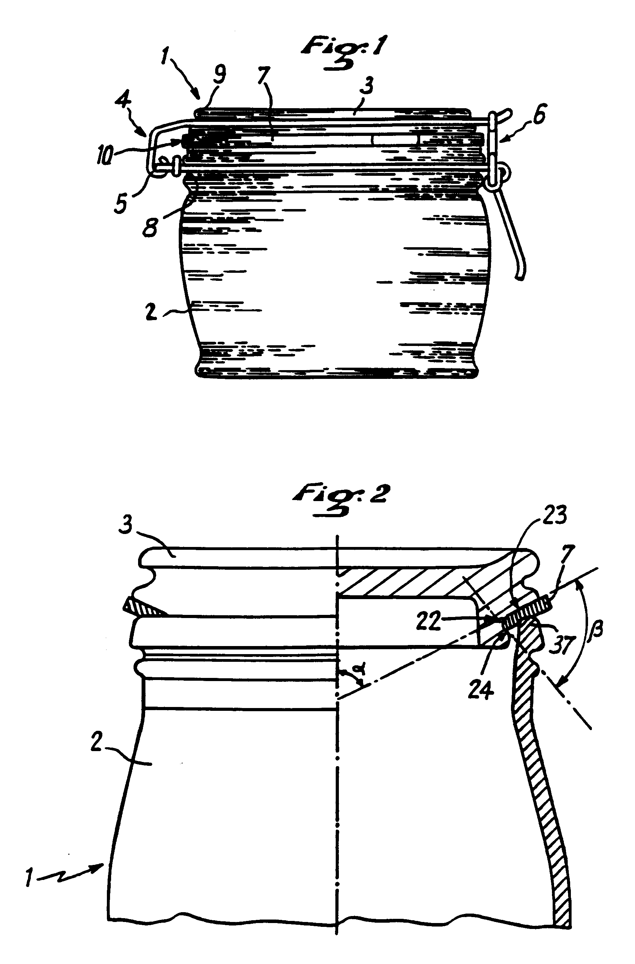

Cela étant, il est connu de longue date dans le domaine alimentaire de tels conditionnements, tels que bocaux moulés, constitués généralement par un contenant de forme adaptée et un couvercle articulé et verrouillé sur le contenant par un système de fermeture. Un tel mode de réalisation est représenté à la figure 1.

Ainsi, le conditionnement 1 est constitué essentiellement d'un contenant 2, d'un couvercle 3, adapté à la fermeture du dit contenant, d'une monture métallique 4 qui présente à la fois un système d'articulation 5 du couvercle sur le contenant et un système 6 de fermeture et de verrouillage du couvercle sur le contenant.

Par ailleurs, pour réaliser l'étanchéité entre le couvercle 3 et le contenant 2, un joint 7 est généralement prévu au niveau de l'ouverture du contenant, traditionnellement placé dans une gorge ou rétreint 10 prévu dans la masse même du couvercle 3.

Par ailleurs, on retrouve également la présence de gorges ou rétreints 8, 9 au niveau du col du bocal, et au niveau du couvercle afin que la monture métallique 4 puisse prendre appui sur ces deux éléments et autoriser le maintien du couvercle sur le contenant tout en écrasant le joint pour autoriser l'étanchéité.

Il est à noter que les couvercle et contenant de tels bocaux sont généralement réalisés par moulage, et la réalisation de ces gorges oblige un moulage avec contre-dépouille. Il est alors nécessaire de recourir au moulage des éléments avec un moule présentant au moins deux parties afin d'autoriser le démoulage.

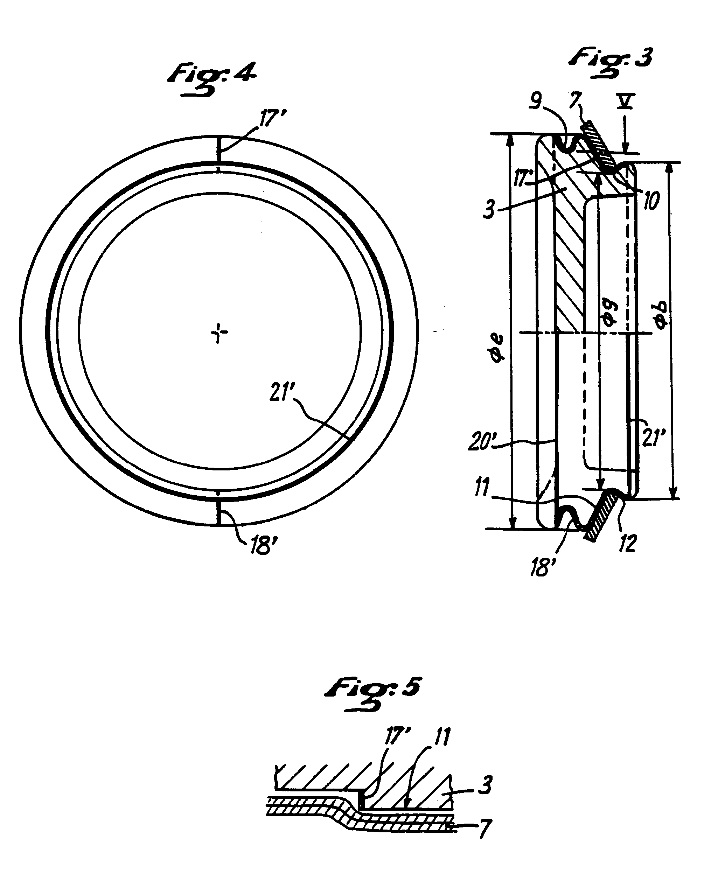

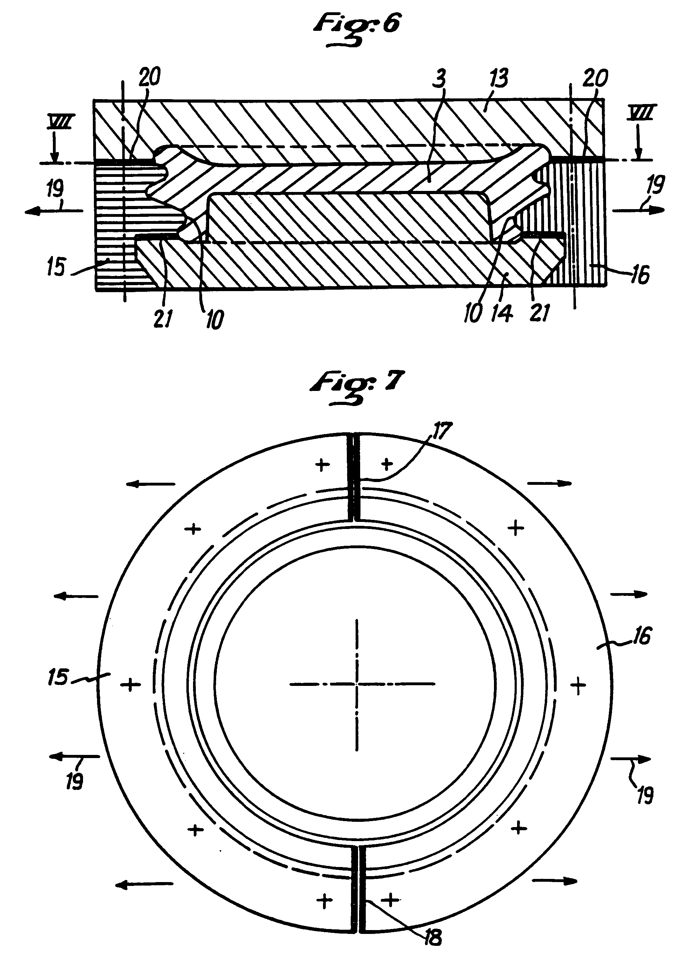

A ce sujet, et à titre d'exemple, la figure 3 montre un couvercle de conditionnement tel que connu de l'état de la technique, vu en profil avec coupe partielle, la figure 4 montre le couvercle de la figure 3 vu de dessous, et la figure 5 montre un détail du couvercle illustré à la figure 3 selon l'axe V.

Par ailleurs, les figures 6 et 7 représentent schématiquement un moule en plusieurs parties permettant la réalisation du couvercle des figures 3 et 4 comme le réalise l'homme du métier aujourd'hui.

La figure 3 montre un couvercle 3 présentant à sa partie inférieure au moins une gorge ou rétreint 10, tel que décrit ci-dessus, et qui constitue une contre-dépouille pour le moulage.

Cette gorge 10 définit notamment une portée d'appui 11 pour le joint d'étanchéité 7 ainsi qu'une butée latérale 12, évitant au joint d'étanchéité d'être happé vers l'intérieur du contenant lors de la création du vide.

Le moule des figures 6 et 7 permet une telle réalisation et comporte à ce sujet : une partie supérieure 13 permettant le moulage du dessus du couvercle 3, une partie inférieure 14, permettant le moulage de la partie intérieure du couvercle, ainsi qu'au moins deux parties latérales 15 et 16 indépendantes, séparées respectivement par les plans de joint 17 et 18.

Ainsi, lors du démoulage, les parties supérieures 13 et 14 étant enlevées, le démoulage des gorges s'effectue en séparant les deux parties latérales 15 et 16 du moule selon les flèches 19 représentées sur les figures.

Un tel mode de fabrication engendre inévitablement des bavures ou coutures de moulage, disposées au niveau des plans de joint. Ces différentes bavures ou coutures sont schématisées par les traits gras 17', 18', 20', 21' sur les figures 3 et 4.

Ainsi, le plan de joint 20, entre la partie supérieure 13 du moule et les parties latérales 15 et 16, engendrent une bavure ou couture 20' telle que montrée à la figure 3. De même, le plan de joint 21, entre la partie inférieure du moule 14 et les parties latérales 15, 16, entraine une bavure ou couture 21'. Par ailleurs, les plans de joint 17 et 18 entre les deux parties latérales 15 et 16 du moule, engendrent également de part et d'autre du couvercle des coutures 17' et 18' dans un plan transversal au couvercle.

Malgré toute la précision et l'attention apportée à la réalisation des moules et au positionnement des différentes pièces de moule entre elles, ces bavures ou coutures seront inévitables et plus ou moins accentuées dans certains cas.

A titre d'exemple, la figure 5 montre, de façon agrandie, la couture 17′ transversale située sur la périphérie du couvercle 3 et notamment au niveau de la portée d'appui 11 et de la butée latérale 12. Ainsi, il se produit un écart de plan engendré par les deux parties du moule. Cet écart est préjudiciable pour l'étanchéité du conditionnement car la portée d'appui du couvercle sur le joint n'est pas parfaitement lisse, continue et plane.

Pour pallier cette différence de niveau, il est alors nécessaire d'une part d'utiliser un joint d'étanchéité 7 d'épaisseur importante, et d'autre part d'obliger la création, par l'intermédiaire du dispositif 4 de fermeture et de verrouillage du couvercle sur le contenant, d'une force très importante afin que le joint épouse correctement les formes au niveau de la couture 17′ ou 18′ pour éviter les fuites au moment du conditionnement puis lors de son stockage.

Par ailleurs, les défauts ou plus précisément les écarts trop importants au niveau de la portée du joint d'étanchéité sont difficilement mesurables au moment de la fabrication et sont généralement constatés, dans le cas de l'utilisation "conserves", lors de la stérilisation ou de la conservation, le vide étant, soit irréalisable, soit rompu au bout de quelques temps, ce qui est naturellement préjudiciable pour cette utilisation.

En outre, selon la tradition, le principe de fonctionnement des joints d'étanchéité utilise la compression ou l'écrasement du joint contre la surface d'appui pour obtenir un contact sûr avec une pression élevée. Aussi, les joints d'étanchéité doivent supporter un fort écrasement. De ce fait, ils ont tendance a se détériorer en raison des fortes contraintes rencontrées au point de contact et donc, travaillent dans de mauvaises conditions.

Cela étant, un tel type de conditionnement est très apprécié aussi bien par le consommateur que par l'industriel car il présente de nombreux avantages, tels qu'empilabilité des conditionnements, facilités d'utilisation, bonnes présentations esthétiques dans le domaine alimentaire, mécanisation possible du montage et du conditionnement.

Le but de la présente invention est de proposer des perfectionnements à un tel type de conditionnement tel que notamment bocal, apte à contenir un produit ou toute substance quelconque sous ambiance de vide ou de vide partiel, qui reprennent l'essentiel de la structure et des avantages des conditionnements connus mais qui apportent une solution au niveau de l'étanchéité, ce sans compliquer le mode de fabrication, ni augmenter le coût de revient.

Au contraire, le conditionnement de la présente invention, grâce à un soin apporté plus spécialement au niveau de la portée d'appui du joint d'étanchéité améliorera cette dernière et pourra permettre de ce fait une réduction de l'importance du joint d'étanchéité, ce qui naturellement se répercutera sensiblement sur le coût de revient ainsi qu'une diminution possible de la force d'appui nécessaire au niveau de l'application couvercle sur contenant.

Un des buts de la présente invention est de proposer un conditionnement tel que bocal ou autre récipient similaire qui permette un contact intime entre le couvercle et le joint par l'absence, à ce niveau, de toute inégalité de plan et l'absence de bavure, couture, provenant du moulage.

Un autre but de la présente invention est de présenter une structure du conditionnement, notamment du couvercle, qui permette de réaliser un système d'étanchéité qui, grâce a plusieurs zones de contact bien réparties, permette de réduire les contraintes supportées par le joint à des valeurs très raisonnables et d'éviter les risques de déchirure du joint. Par ailleurs, le joint d'étanchéité provoque un auto centrage du couvercle sur le pot, ce qui facilite la mise en place.

Un autre but de la présente invention est de proposer divers procédés de fabrication du conditionnement de la présente invention, par moulage, permettant la suppression des bavures ou coutures malgré la présence de zones en contre-dépouille.

Un autre but de la présente invention est de proposer un dispositif de moulage permettant la mise en oeuvre du procédé de fabrication du conditionnement de la présente invention.

Cela étant, le conditionnement de la présente invention, son procédé de fabrication et le dispositif de moulage concourent par la structure et les moyens mis en oeuvre vers une fabrication industrielle en série du conditionnement tout en restant à un prix de revient compétitif par rapport à ceux connus à ce jour.

D'autres buts et avantages de la présente invention, apparaitront au cours de la description qui va suivre, qui n'est cependant donnée qu'à titre indicatif et qui n'a pas pour but de la limiter.

Selon la présente invention, le conditionnement, tel que notamment bocal, comprenant au moins un contenant et un couvercle moulé, adapté à l'ouverture du contenant, entre lesquels est disposé un joint d'étanchéité, le dit couvercle présentant au moins une portée d'appui apte à coopérer avec le dit joint d'étanchéité et l'ouverture du contenant, ainsi qu'une butée latérale pour le dit joint d'étanchéité, la dite portée d'appui et la dite butée latérale définissant entre elles, au moins partiellement, une gorge ou rétreint dans la masse du couvercle, est caractérisé par le fait que la portée d'appui du couvercle est, au moins sur une partie de sa surface en contact avec le dit joint d'étanchéité, continue, plane et lisse, c'est-à-dire sans inégalité de niveau et exempte de bavure, couture au niveau du ou des plans de joint de moulage.

Selon un premier procédé de moulage de l'invention autorisant la fabrication du conditionnement précité, le procédé est mis en oeuvre dans un moule en au moins deux parties dans lequel on intercale, au niveau de la dite gorge ou rétreint, une pièce de moule complémentaire, de contour fermé présentant une ouverture dans sa partie intérieure, de forme adaptée à la dite gorge, apte d'une part à générer lors du moulage, une portée fermée, continue, plane et lisse, et d'autre part telle que le démoulage du corps creux moulé soit possible.

Selon un second procédé de moulage autorisant la fabrication du conditionnement de la présente invention, le moulage est effectué dans un moule en une seule pièce, selon les étapes suivantes :

– on moule le corps creux afin de définir en outre une portée d'appui et une butée latérale d'un profil tel qu'il n'y ait pas de contre-dépouille,

– on démoule le corps creux ainsi formé,

– on modifie, au moins partiellement, le profil de la dite butée latérale, avant refroidissement, par déformation de la matière afin que la génératrice de la portée d'appui et celle de la butée latérale définissent un angle aigu dans certaines zones.

Enfin, le dispositif de moulage, autorisant la mise en oeuvre du premier procédé précité, comporte un moule en au moins deux parties, dont le plan de joint est sécant par rapport au plan de la dite gorge ou rétreint, et est caractérisé par le fait qu'il comporte une pièce complémentaire, amovible par rapport aux dites autres parties du moule, de contour fermé, présentant dans sa partie intérieure une ouverture apte à définir, au niveau de la dite gorge ou rétreint, au moins une portée fermée, continue, plane et lisse.

La présente invention sera mieux comprise à la lecture de la description suivante accompagnée des figures en annexe qui en font partie intégrante.

La figure 1 montre un mode de réalisation d'un conditionnement de type bocal.

La figure 2 montre une vue partielle en coupe d'un mode de réalisation du conditionnement selon la présente invention.

La figure 3 montre une vue en coupe partielle d'un couvercle moulé, selon l'état de la technique connu, et utilisé par exemple sur un conditionnement tel que représenté à la figure 1.

La figure 4 montre une vue de dessous du couvercle représenté à la figure 3 illustrant particulièrement les bavures ou coutures dues au moulage.

La figure 5 montre une vue partielle d'un détail du couvercle, selon l'état de la technique, tel que représenté à la figure 3 selon la flèche V.

La figure 6 illustre schématiquement une disposition de moule, en au moins deux parties, permettant le moulage du couvercle de la figure 3 selon un procédé de moulage connu.

La figure 7 montre une vue de dessus de la disposition du moule telle que représentée à la figure 6, selon la flèche VII-VII.

La figure 8 illustre une vue de côté avec coupe partielle, d'un couvercle selon la présente invention, utilisable sur un conditionnement tel que représenté à la figure 1.

La figure 9 montre schématiquement la disposition d'un moule en coupe permettant la réalisation du couvercle tel que représenté à la figure 8.

La figure 10 montre une vue de dessus en coupe, selon l'axe X-X de la figure 9, illustrant une disposition de moule.

La figure 11 montre un couvercle de conditionnement, selon la présente invention, dans un autre mode de réalisation, utilisable sur un conditionnement de type bocal tel que représenté à la figure 1.

La figure 12 montre une vue de dessous du couvercle représenté à la figure 11.

La figure 13 montre un détail du couvercle tel que représenté à la figure 11 illustrant son procédé de réalisation.

La figure 14 représente en vue de coupe la mise en place du joint d'étanchéité sur le couvercle du conditionnement selon un autre mode de réalisation.

La figure 15 montre la mise en place du couvercle telle qu'illustrée à la figure 14 sur le contenant.

La figure 16 représente le couvercle tel qu'illustré à la figure 14 en position fermée sur le contenant.

L'invention vise un conditionnement, tel que bocal ou autre récipient, ainsi que des procédés de moulage de corps creux autorisant la fabrication du dit conditionnement et un dispositif de moulage autorisant la mise en oeuvre d'un des procédés de moulage.

La description qui va suivre est particulièrement appliquée au conditionnement de type bocal. Toutefois, la présente invention peut s'appliquer à tout type de conditionnement destiné à contenir un produit ou toute autre substance sous ambiance de vide ou de vide partiel pour, par exemple, conserver le dit produit ou substance.

Une application préférentielle, mais non limitative de l'invention, concerne le domaine alimentaire et la réalisation d'articles ménagers et/ou industriels pour conservation.

Dans le préambule de la présente demande, il a été rappelé l'état de la technique connu notamment, en ce qui concerne la réalisation des couvercles de conditionnement qui, généralement, comportent au moins une gorge ou rétreint destiné à recevoir un joint d'étanchéité.

Toutefois, le fait d'avoir une gorge ou rétreint constitue une contre-dépouille, ou dépouille négative, pour le moule et dirige l'homme du métier vers un procédé de moulage utilisant un moule en au moins deux parties.

A ce sujet, rappelons que la figure 6 illustre, schématiquement, un tel moule réalisé en quatre parties pour faciliter et accélérer la fabrication. Cependant, on pourrait envisager un tel moule en deux parties uniquement, voire plus.

Le principal inconvénient du système de moulage en plusieurs parties réside dans la présence inévitable de bavures ou coutures au niveau des plans de joint des différentes parties du moule.

Quelquefois ces bavures ou coutures sont inesthétiques, mais dans d'autres cas, elles sont préjudiciables à une bonne efficacité. Dans le cas présent, les bavures ou coutures, repérées 17′ et 18′ sur la figure 4, sont d'une part une entrave à l'étanchéité du conditionnement et nécessitent, entre autres, l'utilisation d'un joint d'étanchéité 7, d'épaisseur importante, et de bonne maléabilité, et d'autre part requièrent l'utilisation d'un dispositif de fermeture et de verrouillage permettant d'appliquer le couvercle sur le contenant avec une force très importante.

Ce défaut est quelquefois augmenté par un défaut de planéité de la portée du joint ou de l'ouverture du bocal, ce qui rend alors l'étanchéité impossible.

Pour éviter ces inconvénients, on apporte le plus de soin possible à la réalisation du moule, mais les contrôles de qualité des pièces réalisées sont difficiles à mener ; ainsi, généralement, c'est l'utilisateur qui constate le défaut d'étanchéité, soit au moment de la stérilisation, soit au moment de la conservation du produit car l'étanchéité est, soit irréalisable, soit rapidement rompue après la phase de stérilisation.

Malgré ces inconvénients, de tels conditionnements, généralement réalisés en verre, connaissent un large succès tant sur le plan artisanal que sur le plan industriel pour leur application et leur commodité. C'est pourquoi, la présente invention propose des perfectionnements à de tels conditionnements afin de surmonter leurs inconvénients au niveau de l'étanchéité.

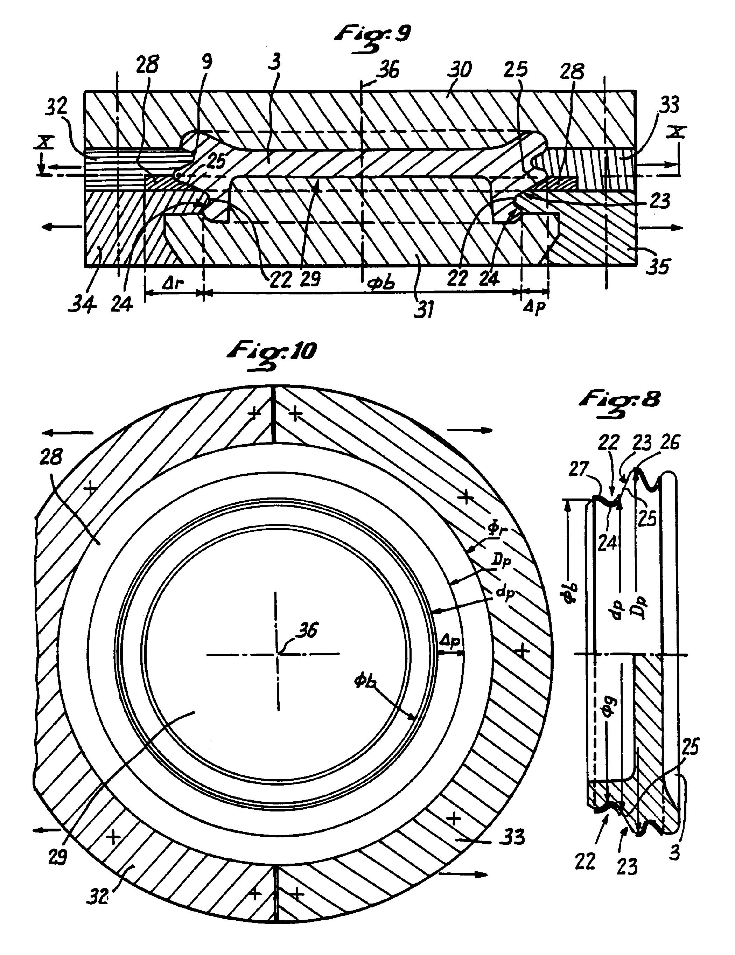

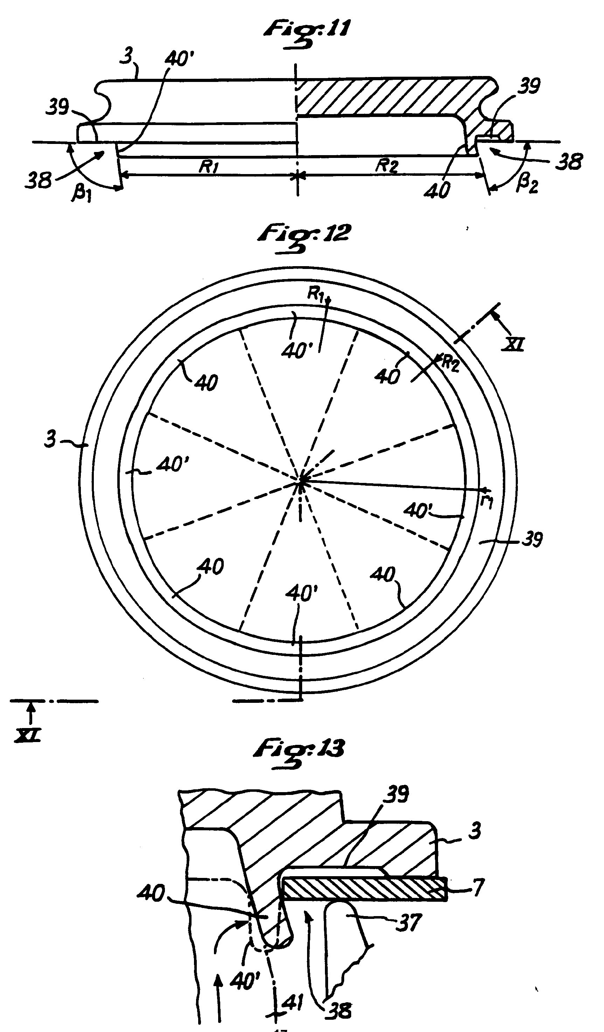

Ces perfectionnements concernent en particulier le couvercle du conditionnement, repéré généralement en 3, illustré dans un premier mode de réalisation aux figures 8 à 10 et, dans un second mode de réalisation aux figures 11 à 13.

La figure 8 illustre un couvercle de bocal, de forme traditionnelle, adapté à l'ouverture du contenant 2 auquel il est destiné. A ce sujet, rappelons qu'entre le couvercle 3 et le contenant 2, il est disposé un joint d'étanchéité 7.

A cet égard, pour faciliter le positionnement et son maintien en place et pour autoriser l'étanchéité, le couvercle 3 présente une gorge 22 définissant d'une part une portée d'appui 23 pour le joint d'étanchéité ainsi qu'une butée latérale 24 correspondant sensiblement au diamètre intérieur du joint d'étanchéité et évitant que celui-ci ne soit happé vers l'intérieur du conditionnement lorsqu'on effectue la stérilisation et par suite le vide à l'intérieur de celui-ci.

Par ailleurs, la dite portée d'appui 23 et la dite butée latérale 24 ont des plans sécants tels que le moulage traditionnel dans un moule à une seule pièce est interdit du fait de la présence d'une contre-dépouille.

Cependant, selon la présente invention, la dite portée d'appui 23, au moins sur une partie de sa surface en contact avec le dit joint d'étanchéité 7, est continue, plane et lisse.

Autrement dit, selon la présente invention, la dite portée d'appui 23 en contact avec le joint d'étanchéité ne montre pas d'inégalité de niveau et est exempte de bavure, couture au niveau du ou des plans de joint du moulage. A cet égard, sur la figure 8, il est à noter que les bavures, coutures au niveau des plans de joint de moulage sont illustrées par des traits gras et on remarque la présence d'une partie 25 exempte de bavure ou couture.

Cette caractéristique est très importante car elle permet au joint d'étanchéité d'être en contact intime avec la dite portée d'appui 23 afin de renforcer l'étanchéité.

Dans le mode de réalisation tel qu'illustré aux figures 8 et 9, ainsi qu'à la figure 2 qui montre la mise en place de ce couvercle sur le contenant, la dite portée d'appui plane 25 se présente sous la forme d'un tronc de cône.

En outre, comme le précise la figure 2, la génératrice de la dite portée d'appui 23 définit un angle $\alpha$ avec l'axe longitudinal du conditionnement compris entre, par exemple, 60 et 90 °.

De plus, la génératrice de la dite portée d'appui 23 et celle de la dite butée latérale 24 définissent quant à elles un angle ß compris par exemple entre 60 et 120 °.

Dans le mode de réalisation représenté aux figures 8, 9, la gorge ou rétreint 22 est défini par deux parties saillantes repérées 26, 27 selon la relation suivante : $\phi e > \phi b > \phi g$ dans laquelle $\phi g$ représente la côte en fond de gorge 22, $\phi e$ représente la côte extérieure de la première partie saillante 26, et $\phi b$ représente la côte extérieure de la deuxième partie saillante 27.

Il est à noter que, pour ne pas surcharger les dessins, ces lignes de côte sont placées sur les figures 8 et 3 qui, rappelons-le, représentent la même forme générale du couvercle.

Le procédé de moulage de la présente invention permettant la réalisation d'un couvercle selon la figure 8 est mis en oeuvre dans un mode en au moins deux parties telles que représentées aux figures 9 et 10.

En outre, selon le procédé de la présente invention, pour générer lors du moulage une portée 25 fermée, continue, plane et lisse, et pour que le démoulage du dit corps creux soit possible, on intercale dans le dit moule, au niveau de la dite gorge ou rétreint 22, une pièce de moule complémentaire 28, de contour fermé, présentant une ouverture 29 dans sa partie intérieure de forme adaptée à la dite gorge.

Cela étant, on prévoit les dimensions de cette ouverture 29 de la pièce 28 au moins égales ou supérieures à celles de la partie saillante 27 la moins importante à savoir φb.

A titre d'exemple non limitatif, les figures 9 et 10 montrent un dispositif de moulage dans lequel le couvercle peut être réalisé et comportant notamment :

– une partie supérieure 30 permettant le moulage du dessus du couvercle 3,

– une partie inférieure 31 permettant le moulage de la partie interne et inférieure du couvercle 3,

– deux parties latérales 32, 33 autorisant le moulage lorsqu'elles sont rapprochées, lorsqu'elles sont écartées, le démoulage de la gorge 9, destinée au dispositif de fermeture du couvercle,

– deux autres parties latérales 34, 35 destinées lorsqu'elles sont rapprochées le moulage d'une partie de la gorge 22 et d'au moins la butée latérale 24, et lorsqu'elles sont éloignées son démoulage,

– et enfin, la pièce complémentaire 28, se présentant dans le cas de la figure sous la forme d'une rondelle dont l'ouverture 29 définit sensiblement l'enveloppe d'un tronc de cône.

Ces différentes pièces de moule sont assemblées et centrées entre elles par tout moyen connu de l'homme de l'art. Il est à noter que la rondelle 28 est disposée sur la figure 9 dans la masse des pièces latérales 32, 33, mais on pourrait également prévoir une disposition différente dans laquelle la rondelle 28 serait centrée dans la masse des pièces latérales 34, 35.

Ainsi que précisée précédemment, la dite pièce complémentaire 28 est amovible par rapport aux autres parties du moule 30 à 35 et présente un contour fermé.

Dans le cas présent, le couvercle du bocal ayant une forme de révolution cylindrique, la pièce complémentaire 28 se présentera avantageusement sous la forme d'une rondelle ou d'un disque. En outre, dans sa partie intérieure, elle présente une ouverture, notamment de forme circulaire, apte à définir au niveau de la dite gorge 22 au moins une portée fermée 25 continue, plane et lisse.

Plus précisément, pour définir une portée d'appui lisse et plane 25 se présentant sous la forme d'un tronc de cône, la dite pièce complémentaire 28 présente une ouverture 29 définissant l'enveloppe d'un tronc de cône dont la grande base est définie par Dp et la petite base par dp, tel que cela est montré aux figures 8 et 10.

Selon l'invention, pour autoriser le démoulage ultérieur de la rondelle, l'enveloppe du tronc de cône ne doit pas constituer une contre-dépouille et la petite base présentera un diamètre dp inférieur ou égal au diamètre de la butée 24 φb.

Un tel dispositif de moulage autorise la mise en oeuvre du procédé suivant :

– on équipe le moule 30 à 35 de la dite pièce de moule complémentaire 28,

– on dépose une paraison dans le dit moule équipé 28, 30-35,

– on moule le corps creux, à savoir le couvercle 3, notamment par pression,

– on ouvre les parties du moule 32 à 35 radialement par rapport à la gorge 22 créée dans le couvercle 3,

– on ôte la dite pièce de moule complémentaire 28, entourant le couvercle moulé, par un déplacement sensiblement parallèle à l'axe 36 du dit couvercle.

Ainsi, grâce à cette rondelle 28 de pourtour fermé, on évite la création de bavures ou coutures, au moins partiellement au niveau de la portée 25 d'appui du couvercle 3 sur le joint 7, cette absence de bavure est schématisée à la figure 8 par l'absence de traits gras à ce niveau.

De plus, la figure 2 montre un positionnement relatif du couvercle 3, de l'ouverture du contenant 2 et du joint 7, la portée 25 exempte de bavure, couture ou dénivellation, se trouvant en vis-à-vis du col 37 du contenant. Ainsi, on aura un contact parfait entre ces trois éléments lorsque le couvercle sera d'une part appuyé par le dispositif de la fermeture 4 et par la suite lorsque la dépression interne sera faite dans le conditionnement 1.

Les figures 11 à 13 montrent un second mode de réalisation du couvercle du conditionnement selon la présente invention. La principale différence avec le mode de réalisation décrit précédemment réside au niveau de la structure de la gorge, repérée 38 dans ce cas, destinée à recevoir le joint d'étanchéité 7 ainsi que dans le procédé de réalisation de cette gorge.

La figure 11, qui est une vue avec coupe partielle selon l'axe XI-XI de la figure 12, montre la présence au niveau de la gorge 38 d'une portée d'appui 39 et d'une butée latérale 40, 40′.

Afin de pouvoir réaliser un tel type de couvercle 3 dans un dispositif de moulage comportant un moule en une seule pièce, afin d'éviter les coutures ou bavures au plan de joint du moule, on procède de la manière suivante :

– on moule le corps creux à savoir le couvercle 3 dans le dit moule, afin de définir en outre la portée d'appui 39 et la butée latérale 40′ d'un profil tel qu'il n'y ait pas de contre-dépouille,

– ensuite, on démoule le couvercle 3 ainsi formé avec la butée latérale 40′ sur tout le pourtour définissant avec la portée 39 un angle ß1 supérieur ou égal à 90 °,

– puis on modifie, au moins partiellement, le profil de la dite butée latérale 40′ , avant refroidissement, par déformation de la matière afin que la génératrice de la portée 39 et la génératrice de la butée déformée 40 définissent un angle aigu ß2 dans certaines zones.

On se trouve ainsi en présence, dans le cas d'un couvercle circulaire, d'une butée 40′ espacée du centre d'un rayon R1 suivi, successivement et périodiquement sur toute la périphérie, d'une butée 40 de rayon R2 supérieur à R1; tel que cela est illustré à la figure 12.

Le détail représenté à la figure 13 montre la déformation de la dite butée latérale 40, 40′ par sa partie intérieure à l'aide d'un poinçon 41. Sur la figure, la position de la butée 40′, sans contre-dépouille, est montrée en pointillés, en sortie de moulage, par contre en traits pleins, on a représenté la position de la butée 40 obtenue par la déformation du piston.

Cette déformation est obtenue immédiatement après la phase de moulage c'est-à-dire lorsque la matière est encore maléable et non cassante.

Les figures montrent une déformation alternée de la butée 40, 40′ , toutefois, on pourrait envisager de faire cette déformation sur toute la périphérie de la butée. Cette déformation pourrait être également effectuée, non pas par un poinçon, mais à l'aide d'un outil permettant la création d'une gorge par la partie extérieure de la butée.

Cela étant, dans ce second mode de réalisation, on réalise les mêmes objectifs que dans le mode de réalisation précédent, à savoir : réalisation d'une portée d'appui 39 plane, qui se présente alors sous la forme d'une couronne circulaire, et constitution d'une butée latérale 40, 40′ qui permet d'une part le maintien du joint d'étanchéité 7 sur le couvercle et d'autre part évite qu'il ne soit happé vers l'intérieur du conditionnement lors de la stérilisation.

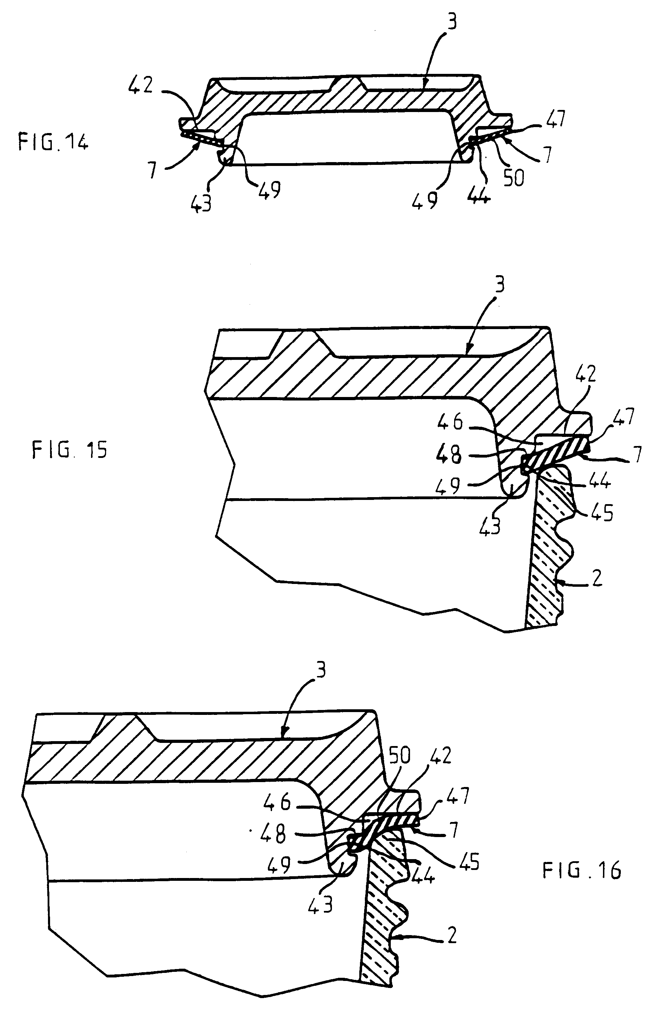

Les figures 14 à 16 montrent un troisième mode de réalisation du couvercle de conditionnement selon la présente invention, la différence essentielle avec les réalisations décrites précédemment résidant dans le mode de travail du joint.

L'aptitude du joint à se déformer pour épouser au mieux avec une forte pression d'appui les surfaces en contact demeure un facteur essentiel de bonne étanchéité. Aussi, certains compromis entre le joint et les portées d'appui doivent être trouvés.

L'absence de bavure, couture de moulage sur la portée d'appui du joint permet d'apporter une réelle amélioration au niveau de l'étanchéité. La structure qui va être décrite ci-dessous permet un éventuel complément d'efficacité au niveau de l'étanchéité.

Plus précisément, le couvercle 3 présente des moyens pour faire travailler le joint d'étanchéité 7 à la flexion. Il s'agit d'un mode d'utilisation du joint d'étanchéité 7 totalement différent de l'emploi traditionnel qui est strictement basé sur la déformation du joint d'étanchéité par compression et écrasement.

Le travail du joint d'étanchéité par flexion procure de nombreux avantages, et tout particulièrement, le joint se comporte comme un joint épais, voire mieux encore, même s'il présente une faible épaisseur. En effet, il dispose alors d'une grande souplesse, d'une aptitude à se déformer amplement pour, par exemple, rattraper les écarts de surface et également permettre une large répartition des efforts afin de limiter les contraintes ponctuelles et éviter tout risque de déchirure.

En outre, la faible épaisseur du joint permet de conserver les avantages d'un faible coût.

La figure 14 représente en vue de coupe le couvercle 3, selon un autre mode de réalisation, avec la mise en place du joint d'étanchéité 7 selon la présente invention. Le couvercle 3 comporte une portée annulaire d'appui 42 contre laquelle le joint 7 vient s'appliquer lors de la fermeture du conditionnement.

Pour améliorer l'étanchéité, cette surface d'appui 42 peut avantageusement comporter une série de stries circulaires.

De plus, le couvercle 3 comporte une butée latérale circulaire 43 pour le joint 7. En outre, celle-ci vient s'introduire à l'intérieur du col du contenant 2, non illustré sur la figure 14, pour autoriser un centrage relatif des deux éléments.

Comme il apparait à la figure 14, le couvercle présente des moyens pour orienter le joint d'étanchéité 7 selon un profil en tronc de cône particulièrement favorable au centrage du couvercle 3 sur le contenant lors de sa mise en place.

La figure 15 représente l'application du couvercle 3 sur le contenant 2 lors de sa mise en place. Le couvercle 3 comporte des moyens pour rabattre le bord intérieur 44 du joint 7 contre le col 45 du contenant 2. Il s'en suit le fléchissement du joint d'étanchéité 7 qui se voit appliquer contre le col 45.

Le couvercle présente des moyens pour maintenir le bord intérieur 44 du joint 7 écarté de la surface d'appui 42. Ainsi, il se crée une chambre annulaire 46 entre le joint 7 et la surface d'appui 42. La section de cette chambre annulaire est sensiblement triangulaire ou équivalente telle qu'illustrée à la figure 15. L'air intérieur à cette chambre 46 est en quelque sorte prisonnier et ne peut s'échapper car le joint 7 présente une ligne de contact 47 localisée au niveau de l'extérieur du joint 7 et de la surface d'appui 42, une zone de contact 48 avec la butée latérale circulaire 43.

Ces moyens précités se présentent, dans le mode de réalisation illustré, sous la forme d'une gorge 49 réalisée dans la butée latérale 43 de centrage, cette gorge 49 présentant un plan décalé par rapport à la surface d'appui 42.

De la sorte, la partie intérieure 44 du joint d'étanchéité 7 est maintenue à distance et écartée de la zone d'appui 42. L'écartement de la gorge 49 par rapport à la zone d'appui 42 est par exemple sensiblement égal à l'épaisseur du joint 7.

A la figure 16, le couvercle 3 est illustré en position de fermeture. Dans ce cas, le joint 7 est fléchi et son bord extérieur 47 vient s'appliquer contre la surface d'appui 42, sa partie intérieure 44 est appliquée contre les parois de la gorge 49.

Par suite de la déformation du joint d'étanchéité 7, le volume intérieur de la chambre 46 est réduit, il en ressort une compression de l'air qui a tendance à appliquer la partie centrale 50 du joint contre le rebord 45 du col du contenant 2.

Cette zone centrale 50 est appliquée avec une excellente répartition de charge puisqu'il s'agit d'un effort de fluide comprimé. La souplesse du joint d'étanchéité 7 et plus particulièrement sa faible épaisseur sont mis à profit pour appliquer le joint contre le col 45 et en particulier toutes les inégalités superficielles ou dimensionnelles sont rattrapées tant au niveau du col 45 que de la portée d'appui 42.

Pour faciliter la mise en place du couvercle 3 sur le contenant 2 de préférence, le diamètre à l'extrémité de la butée de centrage 43 est réduit.

Avec le décalage de la gorge 49 par rapport à la surface d'appui 42, le joint d'étanchéité 7 présente deux lignes de contact mécaniques 47 et 48 séparées par une zone d'appui 50 pressurisée disposée sous la chambre 46.

De par une telle disposition, il a été constaté que le vide peut être entretenu sans aucun effort extérieur sur le couvercle 3. Seuls le poids du couvercle et la pression atmosphérique externe s'appliquant sur le couvercle suffisent à plaquer le joint 7 sur le col 45 pour assurer une étanchéité parfaite.

Ceci a pour avantage inhérent de permettre d'utiliser comme système de fermeture 4, non plus un mécanisme métallique de verouillage traditionnel 5, 6, incompatible avec l'emploi des fours a micro-ondes, mais un simple étrier ou clips, qui pourrait être par exemple réalisé en matière plastique, apte à prendre appui et à s'encliqueter au niveau des différents rétreints extérieurs au col du contenant.

Ainsi ce dernier pourra parfaitement supporter un passage au four à micro-ondes et rendra le bocal de conserve de la présente invention compatible avec des progrès technologiques récents en matière de cuisine domestique. Toutefois, le dit étrier pourrait aussi être réalisé traditionnellement en métal.

Le fait d'utiliser la flexion du joint d'étanchéité 7 pour l'appliquer contre le contenant 2 permet également d'obtenir déjà un bon contact d'appui lors de la simple mise en place du couvercle sur le contenant 2. Le joint d'étanchéité 7 est mis en place selon un profil en tronc de cône sur le couvercle 3, ce qui favorise le centrage du couvercle 3 sur le col 45 et le fait de poser simplement sur le col 45 du contenant le couvercle 3 produit, en raison de la souplesse du joint 7, déjà un fléchissement initial du joint 7 qui est suffisant pour amorcer l'étanchéité. Le vide qui est ultérieurement créé au sein du bocal provoque l'enfoncement élastique du couvercle 3 sur le contenant. Cela entraine une plus importante déformation du joint 7 tel qu'illustré à la figure 16 mais à aucun moment l'étanchéité n'est rompue.

Cela étant, il est à noter que la réalisation d'un tel couvercle mettra en oeuvre notamment le procédé de moulage décrit précédemment.

Naturellement, d'autres mises en oeuvre de la présente invention, à la portée de l'homme de l'art, auraient pu être envisagées sans pour autant sortir du cadre de la présente demande. En particulier, l'homme du métier pourra appliquer toute sa connaissance en matière de moule par pressage ou par injection pour la constitution structurelle des moules nécessaires à l'obtention du conditionnement de la présente demande.

**Revendications**

1. Conditionnement (1), tel que notamment bocal, comprenant au moins un contenant (2) et un couvercle moulé (3) adapté à l'ouverture du contenant, entre lesquels est disposé un joint d'étanchéité (7), le dit couvercle (3) présentant au moins une portée d'appui (23 ; 39) apte à coopérer avec le dit joint d'étanchéité (7) et l'ouverture (37) du contenant, ainsi qu'une butée latérale (24; 40, 40') pour le dit joint d'étanchéité (7), la dite portée d'appui (23 ; 39) et la dite butée latérale (24 ; 40, 40') définissant entre elles, au moins partiellement une gorge ou rétreint (22 ; 38) dans la masse du couvercle (3), caractérisé par le fait que la dite portée d'appui (23 ; 39 ; 42), au moins sur une partie de sa surface en contact avec le dit joint d'étanchéité (7), est continue, plane et lisse, c'est-à-dire sans inégalité de niveau et exempte de bavure, couture, au niveau du ou des plans de joint de moulage.

2. Conditionnement selon la revendication 1, caractérisé par le fait que la dite portée d'appui (23, 25) se présente sous la forme d'un tronc de cône.

3. Conditionnement selon la revendication 1, caractérisé par le fait que la dite portée d'appui plane (39) se présente sous la forme d'une couronne circulaire.

4. Conditionnement selon la revendication 1, caractérisé par le fait que le couvercle (3) présente des moyens pour faire travailler le joint (7) d'étanchéité à la flexion.

5. Conditionnement selon la revendication 4, caractérisé par le fait que le couvercle (3) présente des moyens pour rabattre le bord intérieur (13) du joint d'étanchéité (7) contre le col (14) du contenant (2).

6. Conditionnement selon la revendication 4, caractérisé par le fait que le couvercle (3) présente des moyens pour orienter le joint d'étanchéité (7) selon un profil en tronc de cône lorsque celui-ci est mis en place sur le couvercle (3).

7. Conditionnement selon la revendication 4, caractérisé par le fait que le couvercle (3) présente des moyens pour maintenir le bord intérieur (13) du joint d'étanchéité (7) écarté de la portée d'appui (11) du couvercle (3).

8. Conditionnement selon l'une quelconque des revendications 4 à 7, caractérisé par le fait que les moyens se présentent sous la forme d'une gorge (18) destinée à recevoir le joint d'étanchéité (7) réalisé dans la butée latérale (12) du couvercle (3) dont le plan est décalé par rapport à la portée d'appui (11).

9. Conditionnement selon la revendication 8, caractérisé par le fait que la distance séparant la gorge (18) et la portée d'appui (11) est sensiblement égale à l'épaisseur du joint d'étanchéité (7).

10. Conditionnement selon la revendication 8, caractérisé par le fait que le profil de la butée latérale (12) présente à son extrémité un diamètre réduit.

11. Conditionnement selon la revendication 4, caractérisé par le fait que le couvercle (3) présente un profil tel qu'une chambre annulaire (15) étanche est créée entre les lignes de contact (16 et 17) du joint d'étanchéité (7) sur le couvercle (3).

12. Conditionnement selon la revendication 11, caractérisé par le fait que le joint (7) d'étanchéité présente deux lignes (16 et 17) de contact mécanique séparées par une zone d'appui (19) pressurisée.

13. Conditionnement selon la revendication 4, caractérisé par le fait que la portée d'appui (11) présente une série de rainures circulaires concentriques.

14. Procédé de moulage d'un corps creux, dont le profil présente, au moins partiellement, une gorge ou rétreint (22) périphérique dissymétrique, autorisant la fabrication du conditionnement selon la revendication 1, et notamment le moulage de son couvercle (3), le dit procédé étant mis en oeuvre dans un moule en au moins deux parties, caractérisé par le fait que l'on intercale dans le moule (30 - 35), au niveau de la dite gorge ou rétreint (22), une pièce de moule complémentaire (28), de contour fermé, présentant une ouverture (29) dans sa partie intérieure, de forme adaptée à la dite gorge (22), apte d'une part à générer lors du moulage une portée (25) fermée, continue, plane et lisse, et d'autre part tel que le moulage du dit corps creux (3) soit possible.

15. Procédé de moulage selon la revendication 14, comportant les étapes suivantes :
– on équipe le moule (30 - 35) de la dite pièce de moule complémentaire (28),
– on dépose une paraison dans le dit moule équipé (28, 30 - 35),
– on moule le corps creux (3),
– on ouvre le moule (32 - 35) radialement par rapport à la gorge (22),
– on ôte la dite pièce de moule complémentaire (28), entourant le corps (3) moulé, par un déplacement sensiblement parallèle à l'axe (36) du corps creux.

16. Procédé de moulage selon la revendication 14, la dite gorge ou rétreint (22) étant compise entre deux parties saillantes (26, 27) et définie par la relation suivante : $\phi e > \phi b > \phi g$, dans laquelle $\phi g$ représente la côte en fond de gorge (22), $\phi e$ représente la côte de la première partie saillante (26), $\phi b$ représente la côte de la deuxième partie saillante (27), caractérisé par le fait que l'on prévoit les dimensions de l'ouverture (29) de la dite pièce de moule complémentaire (28) au moins égales ou supérieures à celles de la partie saillante (27) la moins importante $\phi b$.

17. Procédé de moulage d'un corps creux dont le profil présente, au moins partiellement, une gorge ou rétreint (22) périphérique dissymétrique, autorisant la fabrication du conditionnement selon la revendication 1, et notamment le moulage de son couvercle (3), le dit procédé étant mis en oeuvre dans un dispositif de moulage comportant un moule en une seule pièce, caractérisé par le fait que :
– on moule le corps creux (3) afin de définir en outre une portée d'appui (39) et une butée latérale (40′) d'un profil tel qu'il n'y ait pas de contre-dépouille,
– on démoule le corps creux (3) ainsi formé,
– on modifie, au moins partiellement, le profil de la dite butée latérale (40′) obtenue par moulage, avant refroidissement, par déformation de la matière afin que la génératrice de la portée (39) et la génératrice de la butée déformée (40) définissent un angle aigu dans certaines zones.

18. Procédé de moulage selon la revendication 17, caractérisé par le fait qu'on déforme la butée latérale (40, 40′) par sa partie intérieure à l'aide d'un poinçon (41) ou par sa partie extérieure à l'aide d'un outil à gorge.

19. Dispositif de moulage autorisant la mise en oeuvre du procédé selon l'une quelconque des revendications 14 à 16, le dit dispositif présentant un moule en au moins deux parties dont le plan de joint est sécant par rapport au plan de la dite gorge ou rétreint (22), caractérisé par le fait qu'il comporte une pièce complémentaire (28), amovible par rapport aux dites autres parties du moule (30 - 35), de contour fermé, présentant dans sa partie intérieure une ouverture (29), apte à définir au niveau de la dite gorge ou rétreint (22), au moins une portée (25) fermée, continue, plane et lisse.

20. Dispositif selon la revendication 19, la dite gorge ou rétreint (22) étant comprise entre deux parties saillantes (26, 27) et définie par la relation suivante : $\phi e > \phi b > \phi g$, dans laquelle $\phi g$ représente la côte en fond de gorge (22), $\phi e$ représente la côte de la première partie saillante (26), $\phi b$ représente la côte de la deuxième partie saillante (27), caractérisé par le fait que l'ouverture (29) de la dite pièce complémentaire (28) se présente sensiblement sous la forme d'un tronc de cône dont la grande base est définie par Dp et la petite base par dp, telles que celle-ci dp soit supérieure ou égale à $\phi b$ et que l'enveloppe du tronc de cône ne constitue pas une contre-dépouille.

**Patentansprüche**

1. Gefäß (1), wie nämlich Rillenglas, umfassend mindestens einen Behälter (2) und einen der Öffnung des Behälters angepaßten geformten Deckel (3), zwischen denen ein Dichtungsring (7) angeordnet ist, wobei der genannte Deckel (3) mindestens eine Abstützfläche (23; 39), die geeignet ist, mit dem genannten Dichtungsring (7) und der Öffnung (37) des Behälters zusammenzuwirken, sowie einen seitlichen Anschlag (24; 40, 40') für den genannten Dichtungsring (7) umfaßt, wobei die genannte Abstützfläche (23; 39) und der genannte seitliche Anschlag (24; 40, 40') zwischen ihnen mindestens zum Teil eine Rille oder einen Rücksprung (22; 38) in der Masse des Deckels (3) bestimmen, dadurch gekennzeichnet, daß die genannte Abstützfläche (23; 39; 42) mindestens über einen Teil ihrer Oberfläche in Berührung mit dem genannten Dichtungsring (7) kontinuierlich, flach und glatt, d.h. ohne Höhenunebenheit und bart- und nahtlos im Bereich der Formungsfügenebene oder -Ebenen, ist.

2. Gefäß nach Anspruch 1, dadurch gekennzeichnet, daß die genannte Abstützfläche (23, 25) als ein Kegelstumpf ausgebildet ist.

3. Gefäß nach Anspruch 1, dadurch gekennzeichnet, daß die genannte Abstützfläche (23, 25) als eine kreisförmige Krone ausgebildet ist.

4. Gefäß nach Anspruch 1, dadurch gekennzeichnet, daß der Deckel (3) Mittel aufweist, um den Dichtungsring (7) biegsam nachgeben zu lassen.

5. Gefäß nach Anspruch 4, dadurch gekennzeichnet, daß der Deckel (3) Mittel aufweist, um den Unterrand (13) des Dichtungsrings (7) gegen den Kragen (14) des Behälters (2) umzubiegen.

6. Gefäß nach Anspruch 4, dadurch gekennzeichnet, daß der Deckel (3) Mittel aufweist, um den Dichtungsring (7) nach einem kegelstumpfförmigen Profil zu orientieren, wenn dieser letzte auf den Deckel (3) angebracht wird.

7. Gefäß nach Anspruch 4, dadurch gekennzeichnet, daß der Deckel (3) Mittel aufweist, um den Unterrand (13) des Dichtungsrings (7) von der Abstützfläche (11) des Deckels (3) entfernt zu halten.

8. Gefäß nach irgendwelchem der Ansprüche 4 bis 7, dadurch gekennzeichnet, daß die Mittel als eine Rille (18) ausgestaltet sind, die dazu bestimmt ist, den im seitlichen Anschlag (12) des Deckels (3), dessen Ebene bezüglich der Abstützfläche (11) versetzt ist, vorgesehenen Dichtungsring (7) aufzunehmen.

9. Gefäß nach Anspruch 8, dadurch gekennzeichnet, daß der Abstand zwischen der Rille (18) und der Abstützfläche (11) im wesentlichen gleich der Dicke des Dichtungsrings (7) ist.

10. Gefäß nach Anspruch 8, dadurch gekennzeichnet, daß das Pofil des seitlichen Anschlags (12) an seinem Ende einen verminderten Durchmesser aufweist.

11. Gefäß nach Anspruch 4, dadurch gekennzeichnet, daß der Deckel (3) ein derartiges Profil aufweist, daß eine dichte ringförmige Kammer (15) zwischen den Berührungslinien (16 und 17) des Dichtungsrings (7) auf dem Deckel (3) gebildet wird.

12. Gefäß nach Anspruch 11, dadurch gekennzeichnet, daß der Dichtungsring (7) zwei mechanische Berührungslinien (16 und 17) aufweist, die durch einen unter Druck stehenden Abstützbereich (19) von einander getrennt sind.

13. Gefäß nach Anspruch 4, dadurch gekennzeichnet, daß die Abstützfläche (11) eine Reihe konzentrischer, kreisförmiger Nuten umfaßt.

14. Verfahren zum Formen eines Hohlkörpers. dessen Profil mindestens zum Teil eine(n) unsymmetrische(n) Umkreisrille oder - Rücksprung (22) aufweist, das die Herstellung des Gefäßes nach Anspruch 1, und nämlich das Formen seines Deckels (3) ermöglicht, wobei das genannte Verfahren in einer Gießform aus mindestens zwei Teilen angewendet wird, dadurch gekennzeichnet, daß in die Gießform (30 - 35), im Bereich der (des) genannten Rille oder Rücksprungs (22), ein zusätzlicher Gießformteil (28) mit geschlossenem Kontur, zwischengeschoben wird, der in seinem Unterteil eine Öffnung (29) einer der genannten Rille (22) angepaßten Form aufweist, die, einerseits, geeignet ist, beim Formen eine geschlossene, kontinuierliche, flache und glatte Abstützfläche zu bilden und, andererseits, derartig ist, daß das Formen des genannten Hohlkörpers (3) möglich sei.

15. Verfahren zum Formen nach Anspruch 14, das die nachfolgenden Stufen umfaßt:
– die Gießform (30 - 35) wird mit dem genannten zusätzlichen Gießformteil (28) ausgerüstet,
– ein geschmolzener Glasball wird in die genannte ausgerüstete Gießform (28, 30 - 35) gelegt,
– der Hohlkörper wird geformt,
– die Gießform wird radial zur Rille (22) geöffnet,
– der genannte, den formgegossenen Körper (3) umschließende zusätzliche Gießformteil (28) wird durch eine Verschiebung im wesentlichen parallel zur Achse (36) des Hohlkörpers entfernt.

16. Verfahren zum Formen nach Anspruch 14, wobei sich die (der) genannte Rille oder Rücksprung (22) zwischen zwei Vorsprüngen (26, 27) befindet und mittels des nachfolgenden Verhältnisses bestimmt wird: $\phi e > \phi b > \phi g$, worin $\phi g$ die Abmessung am Boden der Rille (22), $\phi e$ die Abmessung des ersten Vorsprungs (26) und $\phi b$ die Abmessung des zweiten Vorsprungs (27) ist, dadurch gekennzeichnet, daß die Abmessungen der Öffnung (29) mindestens gleich derjenigen oder größer als diejenigen des kleinsten Vorsprungs (27) $\phi b$ vorgesehen werden.

17. Verfahren zum Formen eines Hohlkörpers, dessen Profil mindestens zum Teil eine(n) unsymmetrische(n) Umkreisrille oderRücksprung (22) aufweist, das die Herstellung des Gefäßes nach Anspruch 1, und nämlich das Formen seines Deckels (3) ermöglicht, wobei das genannte Verfahren in einer Formungsvorrichtung angewendet wird, die eine einstückige Gießform umfaßt, dadurch gekennzeichnet, daß:

– der Hohlkörper (3) geformt wird, um außerdem eine Abstützfläche (39) und einen seitlichen Anschlag (40') mit einem derartigen Profil, daß es keine Unterschneidung gibt, zu bestimmen,

– der also gebildete Hohlkörper (3) aus der Gießform genommen wird,

– das Profil des genannten durch Formen erhaltenen seitlichen Anschlags (40'), vor dem Abkühlen, durch Verformung des Materials mindestens zum Teil geändert wird, damit die Zeugende der Abstützfläche (39) und die Zeugende des verformten Anschlags (40) in bestimmten Bereichen einen spitzen Winkel bestimmen.

18. Verfahren zum Formen nach Anspruch 17, dadurch gekennzeichnet, daß der seitliche Anschlag (40, 40') von seinem Innenteil aus mittels eines Lochdorns (41) oder von seinem Außenteil aus mittels eines Rillenwerkzeugs verformt wird.

19. Formungsvorrichtung, die die Anwendung des Verfahrens nach irgendwelchem der Ansprüche 14 bis 16 ermöglicht, wobei diese Vorrichtung eine Gießform aus mindestens zwei Teilen aufweist, deren Verbindungsebene die Ebene der (des) genannten Rille oder Rücksprungs (22) schneidet, dadurch gekennzeichnet, daß sie einen bezüglich der genannten übrigen Teile der Gießform (30 - 35) ausnehmbaren zusätzlichen Teil (28) mit geschlossenem Kontur umfaßt, der in seinem Innenteil eine Öffnung (29) umfaßt, die geeignet ist, im Bereich der (des) genannten Rille oder Rücksprungs (22) mindestens eine geschlossene, kontinuierliche, flache und glatte Abstützfläche (25) zu bestimmen.

20. Vorrichtung nach Anspruch 19, wobei sich die (der) genannte Rille oder Rücksprung (22) zwischen zwei Vorsprüngen (26, 27) befindet und mittels des nachfolgenden Verhältnisses bestimmt wird: $\phi e > \phi b > \phi g$, worin $\phi g$ die Abmessung am Boden der Rille (22), $\phi e$ die Abmessung des ersten Vorsprungs (26) und $\phi b$ die Abmessung des zweiten Vorsprungs (27) ist, dadurch gekennzeichnet, daß die Öffnung (29) des genannten zusätzlichen Gießformteils (28) im wesentlichen als ein Kegelstumpf ausgestaltet ist, dessen große Grundlinie durch Dp und dessen kleine Grundlinie durch dp so bestimmt sind, daß diese letzte dp größer als oder gleich $\phi b$ ist und die Umhülle des Kegelstumpfs keine Unterschneidung bildet.

## Claims

1. Packing (1) such as, in particular, a jar, comprising at least a container (2) and a moulded lid (3) fitting the opening of the container, between which is placed a seal (7), the said lid (3) having at least a bearing surface (23; 39) suitable for cooperating with the said seal (7) and the opening (37) of the container, as well as a lateral stop (24; 40, 40') for the said seal (7), the said bearing surface (23; 39) and the said lateral stop (24; 40, 40') defining between them at least partially a groove or constriction (22; 38) in the mass of the cover (3), characterized by the fact that the said bearing surface (23; 39; 42), at least on a portion of its surface in contact with the said seal (7), is continuous, plane and smooth, that is to say without any irregularity in level and free of burrs or seams in the region of the moulding joint plane or planes.

2. Packing according to claim 1, characterized by the fact that the said bearing surface (23, 25) takes the form of a truncated cone.

3. Packing according to claim 1, characterized in that the said plane bearing surface (39) takes the form of a circular crown.

4. Packing according to claim 1, characterized by the fact that the lid (3) has means for causing the seal (7) to flex.

5. Packing according to claim 4, characterized by the fact that the lid (3) has means for pressing down the inner edge (13) of the seal (7) against the neck (14) of the container (2).

6. Packing according to claim 4, characterized by the fact that the cover (3) has means for orientating the seal (7) so that it assumes a frustoconical profile when it is positioned on the lid (3).

7. Packing according to claim 4, characterized by the fact that the lid (3) has means for maintaining the lower edge (13) of the seal (7) away from the bearing surface (11) of the lid (3).

8. Packing according to any one of claims 4 to 7, characterized by the fact that the means take the form of a groove (18) designed to receive the seal (7) provided in the lateral stop (12) of the lid (3), the plane of which is offset in relation to the bearing surface (11).

9. Packing according to claim 8, characterized by the fact that the distance between the groove (18) and the bearing surface (11) is substantially equal to the thickness of the seal (7).

10. Packing according to claim 8, characterized by the fact that the profile of the lateral stop (12) is of reduced diameter at its end.

11. Packing according to claim 4, characterized by the fact that the lid (3) has a profile such that a tight annular chamber (15) is created between the lines of contact (16 and 17) of the seal (7) on the lid (3).

12. Packing according to claim 11, characterized by the fact that the seal (7) has two lines (16 and 17) of mechanical contact separated by a pressurized bearing zone (19).

13. Packing according to claim 4, characterized by the fact that the bearing surface (11) has a series of concentric circular grooves.

14. Process for moulding a hollow body, the profile of which has, at least partially, an asymmetrical peripheral groove or constriction (22), permitting the manufacture of the packing according to claim 1, and, in particular, the moulding of its lid (3), the said process being implemented in a mould in at least two parts, characterized by the fact that there is intercalated in the mould (30 - 35) at the said groove or constriction (22), a mating mould portion (28), with a closed contour, having an opening (29) in its inner portion, of a shape adapted to the said groove (22), suitable, on one hand, for generating upon moulding a closed, continuous, smooth bearing surface (25) and, on the other hand, such that moulding of the said hollow body (3) is possible.

15. Moulding process according to claim 14, comprising the following stages:
   – the mould (30 - 35) is equipped with the said mating mould portion (28),
   – a parison is placed in the said equipped mould (28, 30-35),
   – the hollow body (3) is moulded,
   – the mould (32 - 35) is opened radially in relation to the groove (22),
   – the said mating mould portion (28), surrounding the moulded body (3), is removed by a displacement substantially parallel to the axis (36) of the hollow body.

16. Moulding process according to claim 14, the said groove or constriction (22) being contained between two projecting portions (26, 27) and defined by the following relation: $\phi e > \phi b > \phi g$, wherein $\phi g$ represents the groove dimension at the bottom of the groove (22), $\phi e$ represents the dimension of the first projecting portion (26), and $\phi b$ represents the dimension of the second projecting portion (27), characterized by the fact that the dimensions of the opening (29) of the said mating mould portion (28) are designed to be at least equal to or greater than those of the smaller projecting portion (27), $\phi b$.

17. Process for moulding a hollow body the profile of which has, at least partially, an asymmetrical peripheral groove or constriction (22) permitting the manufacture of the packing according to claim 1 and, in particular, the moulding of its lid (3), the said process being implemented in a moulding device comprising a single-piece mould, characterized by the fact that:
   – the hollow body (3) is moulded so as to define additionally a bearing surface (39) and a lateral stop (40′) with a profile such that there is no undercut,
   – the hollow body (3) thus formed is removed from the mould,
   – the profile of the said moulded lateral stop (40′) is modified, at least partially, before cooling, by deforming the material so that the generatrix of the bearing surface (39) and the generatrix of the deformed stop (40) define an acute angle in certain zones.

18. Moulding process according to claim 17, characterized by the fact that the lateral stop (40, 40′) is deformed via its internal portion using a punch (41) or via its external portion using a grooving tool.

19. Moulding device permitting implementation of the process according to any one of claims 4 to 16, the said device having a mould in at least two parts, the joint plane of which is secant in relation to the said groove or constriction (22), characterized by the fact that it comprises a mating portion (28), removable in relation to the said other portions of the mould (30 - 35), with a closed contour, having in its internal portion an opening (29), suitable for defining at the said groove or constriction (22) at least one closed, continuous, plane, smooth bearing surface (25).

20. Device according to claim 19, the said groove or constriction (22) being contained between the two projecting portions (26, 27) and defined by the following relationship: $\phi e > \phi b > \phi g$, wherein $\phi g$ represents the dimension at the bottom of the groove (22), $\phi e$ represents the dimension of the first projecting portion (26) and $\phi b$ represents the dimension of the second projecting portion (27), characterized by the fact that the opening (29) of the said mating portion (28) has substantially the form of a truncated cone, the large base of which is defined by Dp and the small base by dp, such that the latter, dp, is greater than or equal to $\phi b$ and that the envelope of the truncated cone does not constitute an undercut.

*Fig. 1*

*Fig. 2*

Fig.4

Fig.3

Fig.5

Fig. 6

Fig. 7

Fig. 9

Fig. 10

Fig. 8

*Fig. 11*

*Fig. 12*

*Fig. 13*

FIG.14

FIG. 15

FIG.16